# EUROPEAN PATENT APPLICATION

(11) **EP 2 292 461 A2**
(43) Date of publication of application: **09.03.2011**
(21) Application number: 10175597.3
(22) Date of filing: 07.09.2010
(51) Int. Cl.: B60L 13/06

(54) **Moving vehicle system and method of controlling moving vehicles**

(30) Priority: 08.09.2009 JP 2009206618
(71) Applicant: Murata Machinery, Ltd., Minami-ku Kyoto-shi Kyoto 601-8326 (JP)
(72) Inventor: Sato, Tomoki, Aichi Aichi 484-8502 (JP)
(74) Representative: Zimmermann, Tankred Klaus

(57) **Abstract**

A plurality of moving vehicles each having a secondary element of a linear motor, and a plurality of primary elements of a linear motor arranged at a pitch not more than the length of the secondary element along the travel route of the moving vehicles are provided. Sensors for detecting positions of the moving vehicles are provided at the pitch not more than the secondary element. Further, a controller for controlling the primary elements based on position signals from the sensors are provided.

## Description

### Field of the Invention

The present invention relates to a system where moving vehicles travel under control on a ground side.

### Background Art

In the system of moving a plurality of moving vehicles using a linear motor having a primary side on the ground, the inventor studied a system of monitoring positions of moving vehicles continuously, and driving the moving vehicles continuously using the linear motor. If such a system is obtained, it becomes possible to implement travel control in a manner that positions of moving vehicles such as overhead traveling vehicles are monitored substantially all the time. Patent Publication 1 (JP62-152303A) proposes to provide primary coils of a linear induction motor on the ground and a secondary side conductor on a moving vehicle, and to arrange the primary coils at a pitch not more than the length of the secondary side conductor.

### Summary of the Invention

An object of the present invention is to control a primary side of a linear motor continuously for driving a moving vehicle while continuously monitoring a position of the moving vehicle.
Another object of the present invention is to monitor a position of a moving vehicle continuously over the entire travel route for providing feedback in travel control.
Still another object of the present invention is to control a plurality of moving vehicles to travel synchronously.

The present invention relates to a moving vehicle system.
The moving vehicle system includes:
a plurality of moving vehicles each having a secondary element of a linear motor;
primary elements of the linear motor arranged along a travel route of the moving vehicles at a pitch not more than the length of the secondary element;
a plurality of sensors arranged at the pitch not more than the length of the secondary element for detecting positions of the moving vehicles; and
a controller for controlling the primary elements based on position signals from the sensors.

In the present invention, in a segment where the primary elements of the linear motor and the sensors are arranged at the pitch not more than the length of the secondary conductor, feedback control of the primary side of the linear motor can be implemented all the time. Therefore, it becomes possible to monitor the positions of the plurality of moving vehicles continuously, and control the moving vehicles continuously. Further, the travel route includes a diverge segment, a merge segment, and a curve segment in addition to a straight segment, and the secondary element of the linear motor is bendable in the diverge segment, the merge segment, and the curve segment along the travel route. In the system, feedback control of the primary side of the linear motor can be implemented all the time.

Preferably, the linear motor is a linear synchronous motor, the secondary element is an array of magnets, each of the sensors is a sensor for detecting an absolute position, and the sensors and the primary elements are arranged at a pitch not more than the length of the secondary element. In this manner, the positions of the moving vehicles can be monitored over the entire length of the travel route, and feedback control for the travel can be implemented.
Preferably, each of the sensors is a sensor for detecting an array of magnets of the secondary elements. Thus, the positions of the moving vehicles can be detected using the magnet array of the secondary element of the linear motor.

Further, preferably, the controller is a system controller and a plurality of zone controllers below the system controller. The zone controllers control the primary elements based on a position instruction of each moving vehicle from the system controller and position signals from the sensors.
Each of the zone controllers each reports positions of the moving vehicles in each of predetermined control cycles.
The system controller sends position instructions to each of the zone controllers in each of the control cycles.

In this manner, centralized monitoring of the positions of the moving vehicles is carried out by the system controller, and the moving vehicles are controlled to travel synchronously in accordance with the position instructions from the system controller.

In particular, preferably, the controller controls the moving vehicles to travel synchronously at the same speed along the travel route. In this manner, a large number of traveling vehicles can be controlled to move efficiently without any interference.

Further, a method of controlling moving vehicles according to the present invention is carried out in a system including:
a plurality of the moving vehicles each having a secondary element of a linear motor; and
primary elements of the linear motor arranged along a travel route of the moving vehicles at a pitch not more than the length of the secondary element. The method includes the steps of:
   a) detecting positions of the moving vehicles continuously using a plurality of sensors arranged at the pitch not more than the length of the secondary element; and
   b) controlling the primary elements based on the determined positions.

In the specification, the description regarding the moving vehicle system is directly applicable to the method of controlling moving vehicles, and conversely, the description regarding the method of controlling moving vehicles is directly applicable to the description regarding the moving vehicle system.

### Brief Description of the Drawings

[FIG. 1]

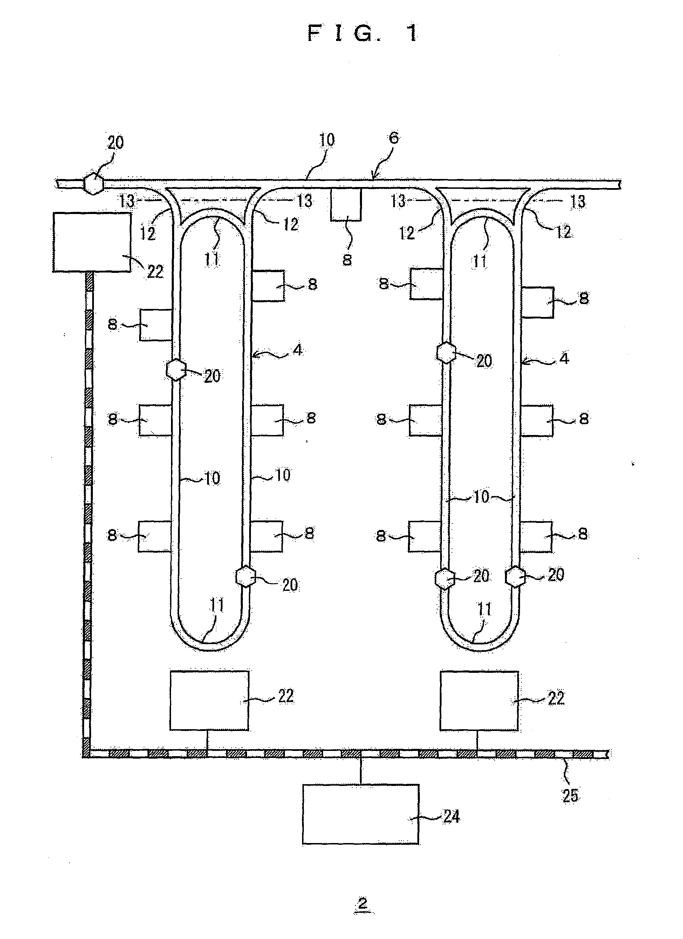

   FIG. 1 is a plan view showing a layout of a moving vehicle system according to an embodiment.
[FIG. 2]

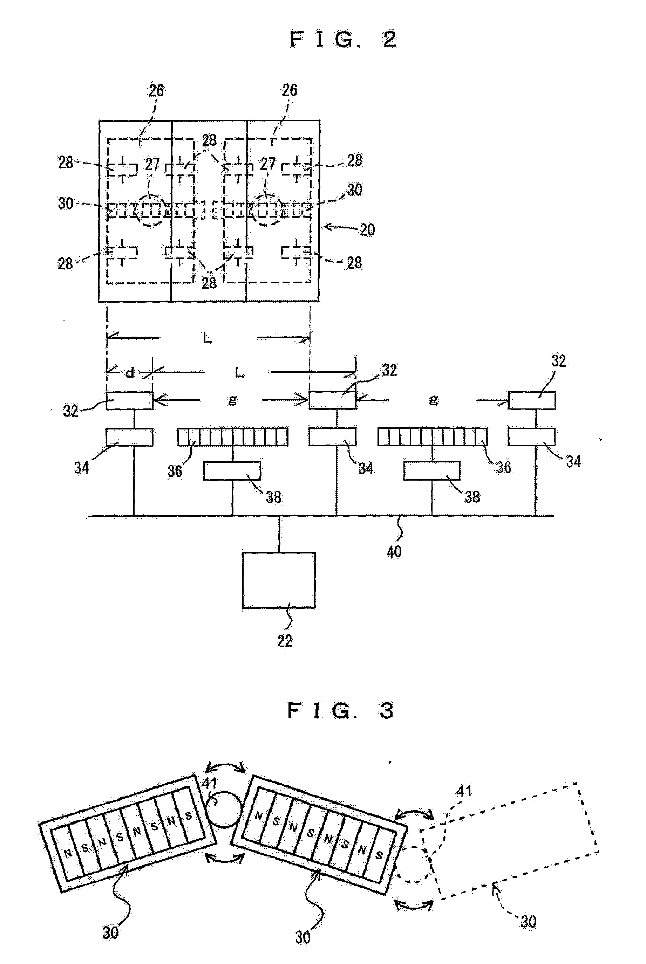

   FIG. 2 is a view showing a moving vehicle having a secondary side of a linear motor, a primary side of the linear motor provided on the ground, and the linear sensor.
[FIG. 3]
   FIG. 3 is a view showing a model of a bendable magnet array.
[FIG. 4]

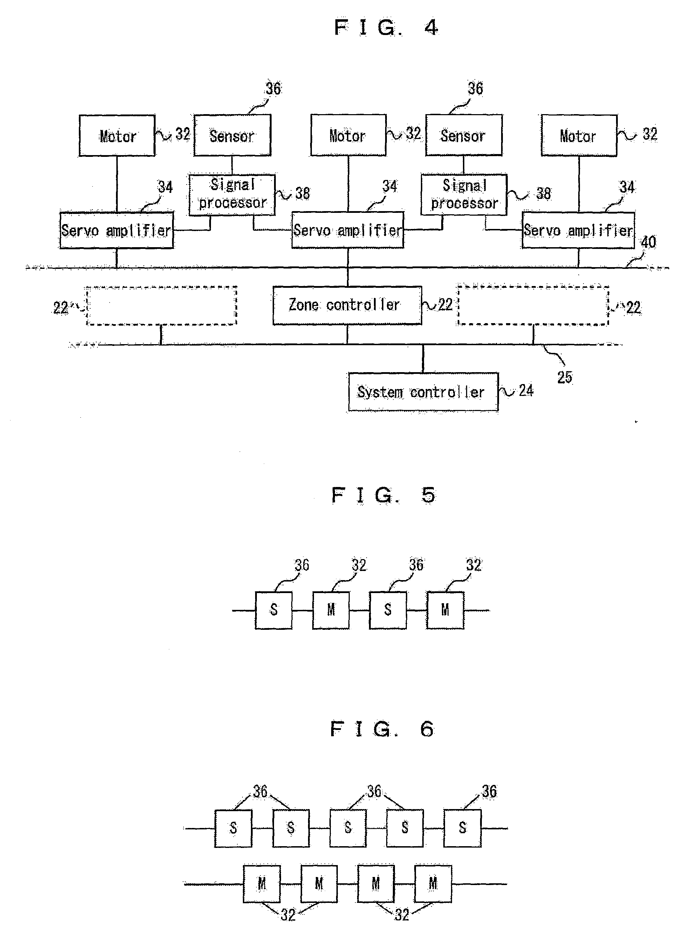

   FIG. 4 is a diagram showing a layout of the secondary side of the linear motor and linear sensors.
[FIG. 5]
   FIG. 5 is a diagram showing a positional relationship between the secondary side of the linear motor and the linear sensor.
[FIG. 6]
   FIG. 6 is a diagram showing another positional relationship between the secondary side of the linear motor and the linear sensor.
[FIG. 7]

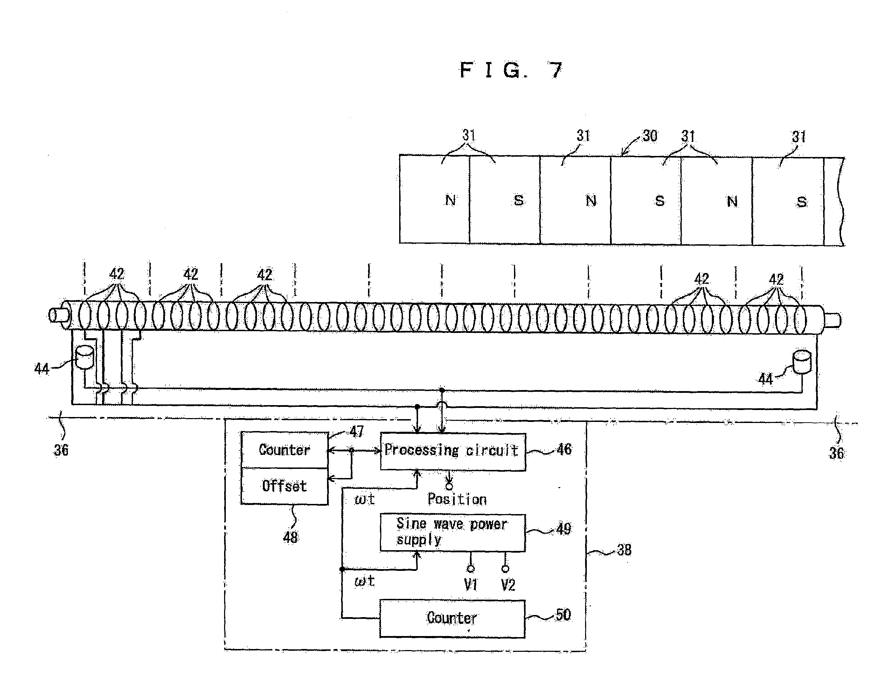

   FIG. 7 is a block diagram showing a linear sensor shown in FIG. 2.
[FIG. 8]

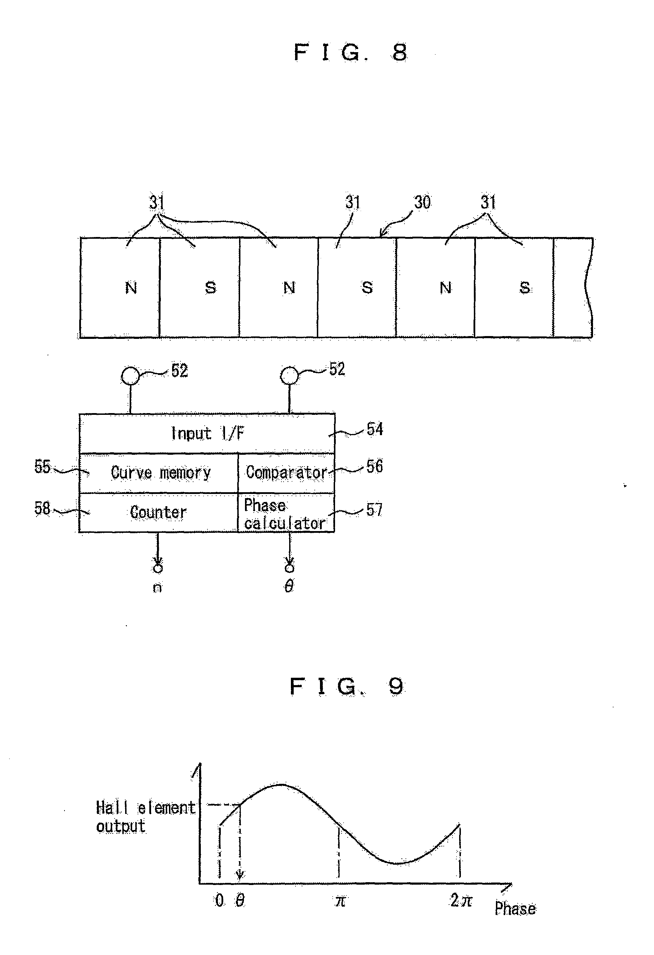

   FIG. 8 is a block diagram showing a sensor using hall elements.
[FIG. 9]
   FIG. 9 is a curve diagram showing signal processing for the output of the hall elements shown in FIG. 8.
[FIG. 10]

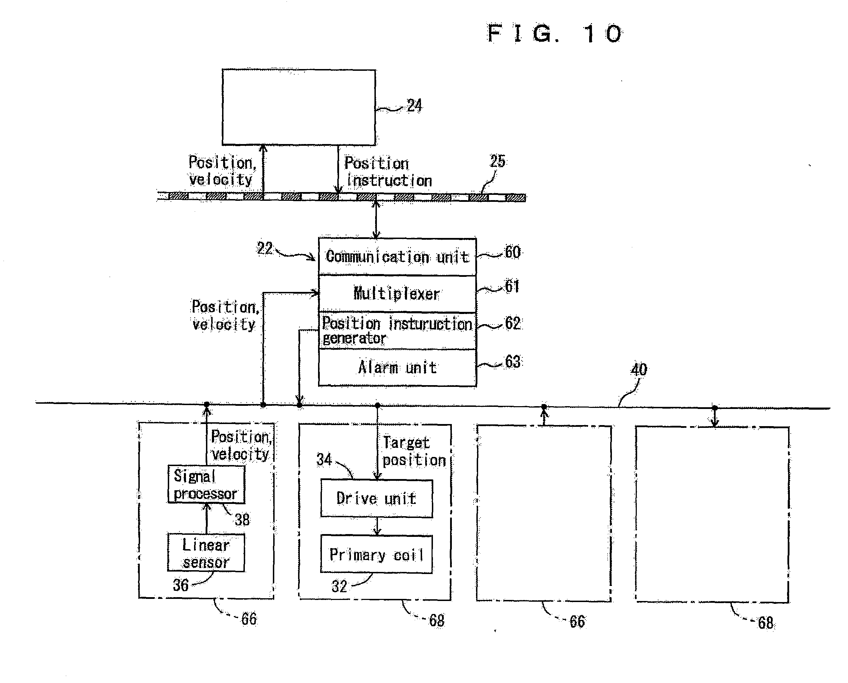

   FIG. 10 is a block diagram showing the relationship between a zone controller and a drive unit of a linear motor in the embodiment.
[FIG. 11]

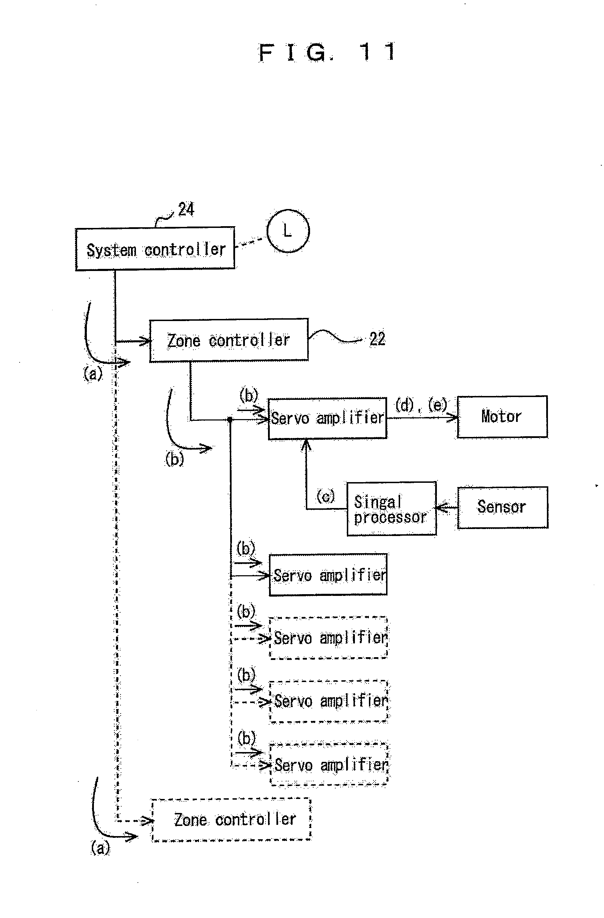

   FIG. 11 is a diagram showing a model of synchronization control between apparatuses in the embodiment.
[FIG. 12]

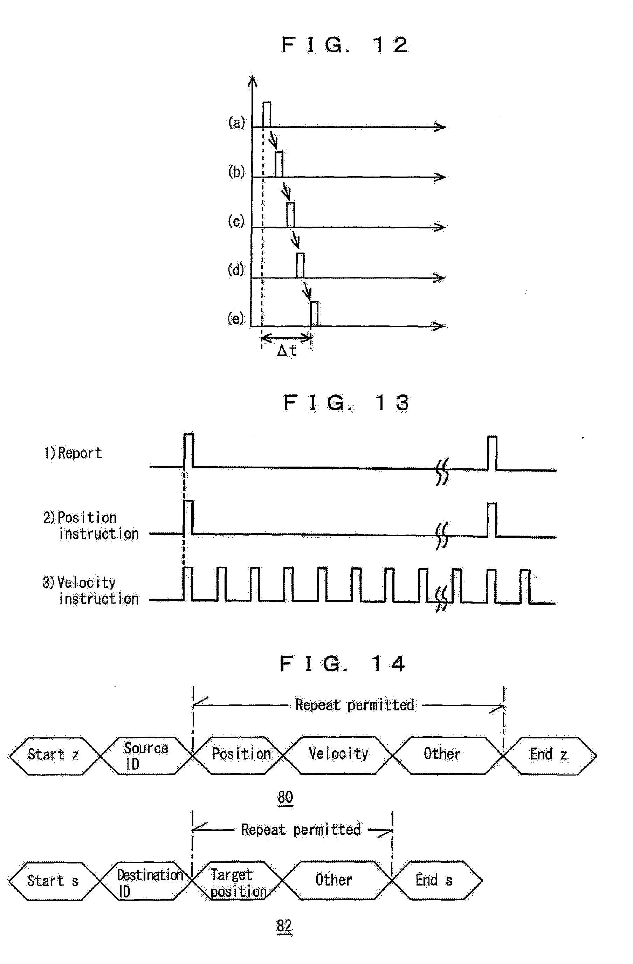

   FIG. 12 is a graph showing timings between packets and a model of delay time in the embodiment.
[FIG. 13]
   FIG. 13 is a curve diagram including a curve (1) showing reports from the zone controller to a system controller, a curve (2) showing position instructions sent from the system controller to the zone controller, and a curve (3) showing velocity instructions sent from the zone controller to the drive unit of the liner motor.
[FIG. 14]
   FIG. 14 is a view schematically showing communication data transmitted between the zone controller and the system controller.
[FIG. 15]

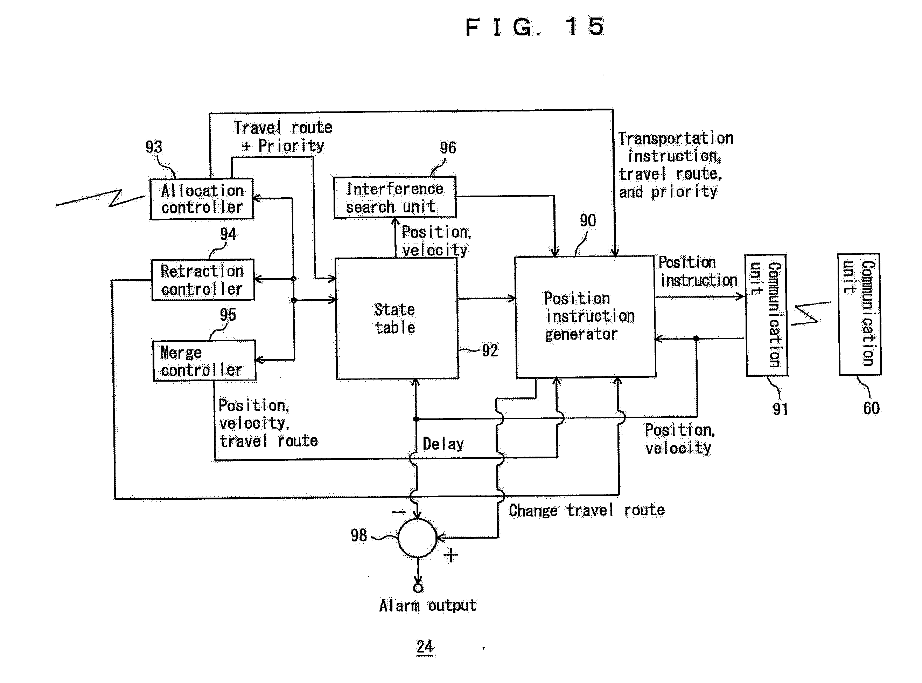

   FIG. 15 is a block diagram showing the system controller in the embodiment.

### EMBODIMENT

Hereinafter, an embodiment for carrying out the present invention in the most preferred form will be described. The embodiment can be modified suitably with reference to techniques known in this technical field, and does not limit the scope of the present invention.

FIGS. 1 to 15 show a moving vehicle system 2 according to the embodiment and its modification. As shown in FIG. 1, in a travel route for moving vehicles 20, for example, a plurality of intra-bay routes 4 are connected each other through an inter-bay route 6. A plurality of stations 8 are provided along the routes 4, 6. Reference numerals 10 denote straight segments in the routes 4, 6. Reference numerals 11 denote curve segments, and reference numerals 12 denote diverge and merge segments. Diverge segments and merge segments are collectively referred to as the diverge and merge segments. Dotted lines 13 in FIG. 1 show zone boundaries. For example, overhead traveling vehicles, rail vehicles that travel along rails on the ground, stacker cranes or the like are used as the moving vehicles 20. In the embodiment, the moving vehicle 20 does not have any transfer apparatus. Therefore, a transfer apparatus that travels synchronously with the moving vehicle 20 is provided in each station 8. By controlling the moving vehicle 20 and the transfer apparatus to travel at the same speed, transfer of an article transported by the moving vehicle 20 is performed.

Reference numerals 22 denote zone controllers. Each of the intra-bay routes 4 and the inter-bay route 6 is considered as a unit of the zone. The zone may include more than one intra-bay route 4 or the inter-bay route 6. Alternatively, one intra-bay route 4 may be divided into a plurality of zones, and the inter-bay route 6 may be divided into a plurality of zones. A reference numeral 24 denotes a system controller for controlling the entire moving vehicle system 2 through the zone controllers 22. In particular, the system controller 24 controls travel of the moving vehicles 20 and the transfer apparatus provided at each of the stations 8. The zone controllers 22 and the system controller 24 are connected by a LAN 25. The zone controller 22 implements control of the moving vehicles 20 and the transfer apparatus at each station 8 in the zone in accordance with instructions from the system controller 24.

FIG. 2 shows structure of the moving vehicle 20. A load receiver is provided at an upper position of the moving vehicle 20. Further, for example, a pair of front and rear bogies 26 are provided at the bottom of the moving vehicle 20. Reference numerals 27 denote bogie shafts for rotation of the bogies 26. Reference numerals 28 denote wheels. For example, magnet arrays 30 are provided at the bottoms of the bogies 26. Clearance is provided between the front and rear magnet arrays 30 for preventing interference during rotation of the bogies 26. Alternatively, instead of providing such clearance, the front and rear magnet arrays 30 may have different heights for preventing interference even if these magnet arrays 30 are overlapped with each other. Further, the magnet arrays 30 may be provided at the fixed bottom of the moving vehicle 20, instead of the bottoms of the bogies 26. The moving vehicle 20 may not have the bogie 26. The moving vehicle 20 may be equipped with a non-contact power feeding apparatus, a power generator or the like, and components such as sensors, communication devices, and the transfer apparatus may be mounted in the moving vehicle 20.

Reference numerals 32 denote primary coils of a linear synchronous motor. The primary coils 32 are arranged at a pitch not more than the total length L of the front and rear magnet arrays 30. It is assumed that the length of the primary coil 32 is d. Reference numerals 34 denote drive units for controlling the primary coils 32 to operate as a linear synchronous motor. Reference numerals 36 denote linear sensors for detecting a position of the moving vehicle 20 by detection of the magnet arrays 30. One linear sensor 36 is provided in each space between the primary coils 32. The linear sensors 36 are provided at a pitch not more than the total length of the magnet arrays 30. It should be noted that the expression "not more than" includes "equal to". An alphabet "g" denotes a gap length between coils 32. The linear sensor 36 is provided at each gap.

FIG. 3 shows a model for allowing the magnet arrays 30 to be bendable. A plurality of magnet arrays 30 are mounted in each of the bogies to form joints 41 between the respective magnet arrays 30. Therefore, the moving vehicle can be accelerated or decelerated also in the curve segment or the like.

FIG. 4 shows a layout of the primary coils (motors) 32 and the linear sensors 36. FIG. 5 shows an example where the primary coils 32 and the linear sensors 36 are arranged in the same straight line. FIG. 6 shows an example where the primary coils 32 and the linear sensors 36 are arranged in two straight lines in parallel. Reference numerals 38 denote signal processing units. For example, the signal processing units 38 are microcomputers or digital signal processors. Each of the signal processing units 3 8 processes a signal from the linear sensor 36, and outputs a position of an absolute coordinate of the moving vehicle 20 to the zone controller 22. A reference numeral 40 denotes a zone LAN for connecting the zone controllers 22 and the drive units 34 to the signal processing units 38. Preferably, the zone controller 22 is provided at intervals of every predetermined number of coils 32 and every predetermined number of linear sensors 36.

The linear sensor 36 directly detects the position of the magnet pole essential to control the synchronous motor, and process information of the magnet pole position to determine the absolute coordinate of the moving vehicle. FIG. 7 shows the linear sensor 36 and the corresponding signal processing unit 38. In the magnet array 30, the magnets 31 are arranged in the moving direction of the moving vehicle at a predetermined pitch. In the linear sensor 36, a plurality of coils 42 are arranged e.g., in one line in the same direction as the magnet array 30. In the embodiment, the pitch of the coils 42 is the same as the pitch of the magnets 31. The pitch of the coils 42 may be an integral multiple of the pitch of the magnets 31, or the pitch of the magnets 31 may be an integral multiple of the pitch of the coils 42. Further, reference numerals 44 denote hall elements provided on both sides of the array of the coil 42. Alternatively, the hall element 44 may be provided in each gap between the coils 42. The hall element 44 detects appearance of the magnet array 30 and appearance of the boundary between the magnets 31. Thus, the positions of the magnet arrays 30 at a pitch longer than the length of the magnet 31 can be determined by the hall elements 44.

The signal processing unit 38 generates a phase signal ωt by a counter 50, and a sine curve power supply 49 outputs sine curves V1, V2 having the phase of ωt. The phase of the sine curve V1 is positive, and the phase of the sine curve V2 is negative. For example, these voltages are applied to a pair of coils 42. That is, an even number of coils 42 are provided as pairs of left and right coils, from the side close to the center to the side remote from the center. The voltage V1 is applied to one ends of the pairs of the coils, and the voltage V2 is applied to the other ends of the pairs of coils. A processing circuit 46 processes a signal from the pairs of the coils 42, e.g., processes the voltage at a point between one pair of coils, and determines the position of the magnet array 30 for each unit of distance which is smaller than the length of the coil 42. For example, assuming that the pitch of the magnets 31 is equal to the pitch of the coils 42, the signal from the coil 42 is repeated periodically, each time the magnet array 30 is shifted by a distance corresponding to two magnets 31. Therefore, the processing circuit 46 determines a position based on the unit having the distance not more than the length of one magnet 31. Then, the number of magnets 31 detected by the hall elements 44 is counted by the counter 47. The counted value is multiplied by the length of one magnet 31, and the resulting value is added to the position determined from the coils 42 to determine the position of the magnet array 30. Further, an offset memory 48 stores an absolute coordinate at the origin point (e.g., central position) of the linear sensor 36. By adding the determined position to the absolute coordinate at the origin point, the absolute coordinate of the magnet array 30 is outputted.

The linear sensor 36 can distinguish the state where all the coils 42 face the magnet array 30 from the state where only some of the coils 42 face the magnet array 30, and the magnet array 30 can distinguish the coils that face the magnet array 30 from the coils that do not face the magnet array 30. Therefore, the position of the magnet array 30 can be detected without counting signals from the hall elements 44.

In the case where a high response type hall element 52 having response time of 1 msec, preferably, 0.1 msec is used, the position of the magnet array 30 can be detected without using the linear sensor 36. FIGS. 8 and 9 show a modified example of such a case. For example, a pair of hall elements 52 are arranged at an interval of two pitches of the magnets 31. Signals from the hall elements 52 are processed by an input interface 54 to monitor which of the left and right hall elements 52 has detected the magnet first. In a curve memory 55, the signal from the hall element that has detected the magnet first is stored for one cycle, i.e., two pitches of the magnets 31. A comparator 56 compares an output of the hall element that has detected the magnet 31 with delay and the stored curve, and a phase calculator 57 determines a phase θ. Further, each time the phase calculator 57 reaches a predetermined phase, the value of the counter 58 is incremented, e.g., by 1. The position of the magnet 31 in the magnet array 30 is determined by counting pitches. In FIG. 8, this variable is denoted by "n".

If the left and right hall elements 52 have the same characteristics, the hall elements 52 output the same curve to the magnet array 30. Therefore, by storing the curve detected on the upstream side, and detecting the phase based on the comparison with this curve, even if the interval between the hall element 52 and the magnet 31 is changed, or even if the magnetic field applied to the hall elements 42 does not have a sine curveform, the phase can be determined correctly. In this example, the pair of left and right hall elements are used. Alternatively, a pair of hall elements for comparison may be provided additionally on both sides of the hall elements for detection with spaces of two pitches of the magnets 31.

FIG. 10 shows the relationship between the zone controller 22 and components such as the primary coil 32, and the linear sensor 36. The zone controller 22 reports the position, velocity and other states of the moving vehicle in each control cycle through the LAN 25. The system controller 24 sends a position instruction or the like to the zone controller 22 in each control cycle. For example, the control cycle is in a range of 1 msec to 100 msec, and more preferably, in a range of 1 msec to 10 msec. In the embodiment, it is assumed that the next control cycle starts at the time when the system controller 24 receives the report of the position and velocity.

A communication unit 60 of the zone controller 22 communicates with the system controller 24, and a multiplexer 61 passes the signal of the position and velocity from a sensor unit 66 to a position instruction generator 62. The position instruction generator 62 generates position instructions to a plurality of coil units 68. Therefore, the signal of the position and velocity is passed to the position instruction generator after information indicating which sensor unit 66 supplied the data is added, or together with the absolute coordinate of the moving vehicle. The position instruction generator 62 generates a target position and a target velocity for each moving vehicle, and controls the corresponding coil unit 68. An alarm unit 63 generates an alarm signal when the moving vehicle is significantly deviated from the target position or the target velocity, or if any incident such as overvoltage, overcurrent, or voltage drop greater than a predetermined value occurs. Further, the alarm unit 63 uses information regarding positions of vehicles on the front and back sides stored by the system controller to stop the vehicles, e.g., safely without any collision.

The sensor unit 66 includes the linear sensor 36 and the signal processing unit 38 described above. The position and velocity are reported at a cycle shorter than one control cycle, e.g., about 10 to 100 times per one control cycle. The coil unit 68 includes the primary coil 32 and its drive unit 34 described above. The drive unit 34 receives the position instructions in each control cycle, and controls the phase and frequency of the electrical current applied to the primary coils 32 for movement to the position designated by the position instruction.

FIGS. 11 and 12 show models of synchronous travel of a plurality of moving vehicles 20 according to structure in FIG. 10. The system controller 24 has a clock as a reference in the entire system. Each controller in the system synchronizes its clock with the clock of the system controller 24. The system controller 24 sends a synchronization packet (a) to the zone controller 22 for synchronization. After the zone controller 22 receives the synchronization packet (a), the zone controller 22 changes its internal settings in accordance with the synchronization packet (a), and as a result, the system controller 24 and the zone controller 22 are synchronized with each other. At the same time, the zone controller 22 sends a synchronization packet (b) to the servo amplifier (the drive unit 34 and the signal processing unit 38 for the primary coil). When the servo amplifier receives this packet, reading processing (c) of reading the sensor signal, velocity control (d) of the moving vehicle, and position control (e) of the moving vehicle are performed. Thus, the zone controller 22 is synchronized with the servo amplifier, and the entire system is operated synchronously within the delay time Δt shown in FIG. 12. By the synchronization control, the position and velocity of a plurality of moving vehicles can be controlled together, and transition between the primary coils of the linear motor is smoothly performed.

For synchronization control in the system, the LAN 25 requires to have a high data rate and a high capacity. In this system, since the apparatuses (controller and sevo amplifier) are concentrated on the ground. Synchronization between the apparatuses can be obtained even in a large scale system.

FIG. 13 shows 1) reports of positions or the like sent from the system controller to the zone controller, 2) position instructions sent from the system controller to the zone controller, and 3) velocity instructions sent from the zone controller to the coil unit. For example, the reports are sent to the system controller 24 in each control cycle in a range of 1 msec to 100 msec, and one control cycle corresponds to a period from a position report to the next report. In each control cycle, preferably, at the time of starting the control cycle, the system controller 24 sends a position instruction to the zone controller. In one control cycle, the zone controller receives a report of the position and velocity multiple times from the linear sensor, and generates velocity instructions for implementing feedback control of the coil units 68.

FIG. 14 shows a report packet 80 sent from the zone controller to the system controller, and a packet 82 of a position instruction sent from the system controller to the zone controller. In the report packet 80 from the zone controller, information showing that this packet is a report from the zone controller, and an ID of the zone controller are written. Next, for each of one or a plurality of moving vehicles under the control of the zone controller, the position, velocity, ID, and other information are notified. The packet 80 may be sent for each of the moving vehicles, and one packet may not include information of a plurality of moving vehicles.

In the packet 82 from the system controller, information to the effect that this packet is transmitted from the system controller, and an ID of the zone controller at the destination are written. For each of the moving vehicles, a target position and other information in the next control cycle are added. One or more dedicate packet 82 may be used for each of the moving vehicles. Assuming that the velocity of the moving vehicle is, e.g., 10 m per second at the maximum, since the control cycle is in a range of 1 to 100 msec, the target position of the moving vehicle is 1 m to 10 mm ahead of the current position. Even if the moving vehicles are provided as densely as possible, the distances between the centers of bodies of the moving vehicles is not less than 1 m. Therefore, the zone controller can determine the correspondence between the target positions and the moving vehicles based on the packet 82. Assuming that the control cycle is in a range of 1 to 10 msec, the target position is 100 to 10 mm ahead of the current position.

FIG. 15 shows structure of the system controller 24. A communication unit 91 communicates with a communication unit 60 of the zone controller. An allocation controller 93 communicates with, e.g., a production controller or a host controller of the production controller and the system controller 24, receives a transportation request, and reports a transportation result. A position instruction generator 90 generates position instructions for respective moving vehicles in each control cycle. The state table 92 stores positions of the moving vehicles along the travel route, velocity, destination, travel route to the destination, travel priority, and states, e.g., indicating whether any article is being transported or not, or the transportation vehicle is out of order. The state table 92 stores states of the moving vehicles along the travel route, and update the states in each control cycle.

A retraction controller 94 determines the necessity of retraction based on the travel route, priority, and position or the like of the moving vehicle in the state table 92, and changes the travel route, destination or the like of the moving vehicle based on the determination. Then, the retraction controller 94 changes the travel route written in the state table 92. A merge controller 95 determines combinations of moving vehicles that may cause interference in the diverge and merge segment, and notifies such combinations to the position instruction generator 90. An interference search unit 96 reads the position and velocity of each moving vehicle from data in the state table 92 to prevent interference between moving vehicles outside the diverge and merge segments, and notifies such combinations to the position instruction generator 90. The position instruction generator 90 implements velocity control to avoid the interference.

In the embodiment, the following advantages are obtained.
(1) At least in straight segments, it is possible to continuously monitor positions of the moving vehicles 20 to continuously implement feedback control of the coil units 68.
(2) By the system controller 24, absolute positions of a plurality of the moving vehicle 20 can be controlled over the entire travel route.
(3) Since centralized control is implemented by the system controller 24, in comparison with the case of distribution control where position instructions are generated by each of zone controllers, processing at the time of passing the boundary between the zone controllers is simplified.
(4) Since the system controller implements position control over the entire area, positions of all the moving vehicles 20 can be controlled accurately at every time point. Further, control of movement of moving vehicles and control of inter-vehicle distance between front and rear moving vehicles can be implemented over the entire area. Accordingly, instructions are allocated to the moving vehicles optimally, optimum retraction of the moving vehicles can be carried out to avoid jams, and interference can be prevented reliably.
(5) The moving vehicles 20 can be controlled to travel densely, i.e., with a small inter-vehicle distance. As in the case of the embodiment, by arranging the primary coils 32 at a pitch more than the length of the magnet array 30, at the maximum, one moving vehicle can be provided at interval of two primary coils 32. In particular, under the control of the system controller 24 and the zone controllers 22, a plurality of moving vehicle can travel synchronously at the same speed.
(6) The moving vehicles 20 can be controlled to travel synchronously with the transfer apparatus at the station 8 easily. When the moving vehicle 20 is decelerated for transfer of the article, the subsequent moving vehicles can be decelerated synchronously under control.

Though the linear synchronization motor is used in the embodiment, alternatively, a linear induction motor may be used, and a secondary conductor of aluminum or the like may be provided in the moving vehicle 20. In this case, a magnetic mark of aluminum or the like may be provided in addition to the secondary conductor, and the magnetic mark is detected by the linear sensor 36. The diverge and merge of the moving vehicle may be controlled mechanically by a guide roller and guide rail (not shown) or the like, or may be controlled electromagnetically by attraction or reaction between the magnet on a side of the bogie vehicle and the coils on the ground. Further, diverge and merge control is implemented by the system controller 24 through the zone controller 22.

### Description of the numerals

2: moving vehicle system
4: intra-bay route
6: inter-bay route
8: station
10: straight segment
11: curve segment
12: diverge and merge segment
13: zone boundary
20: moving vehicle
22: zone controller
24: system controller
25: LAN
26: bogie vehicle
27: bogie shaft
28: wheel
30: magnet array
32: primary coil
34: drive unit
36: linear sensor
38: signal processor
40: zone LAN
41: joint
42: coil
44: hall element
46: processing circuit
47: counter
48: offset memory
49: sine curve power supply
50: counter
52: hall element
54: input interface
55: curve memory
56: comparator
57: phase calculator
58: counter
60, 91: communication unit
61: multiplexer
62: position instruction generator
63: alarm unit
66: sensor unit
68: coil unit
80, 82: packet
90: position instruction generator
92: state table
93: allocation controller
94: retraction controller
95: merge controller
96: interference search unit
98: error detection unit

## Claims

1. A moving vehicle system comprising:
a plurality of moving vehicles each having a secondary element of a linear motor;
primary elements of the linear motor arranged along a travel route of the moving vehicles at a pitch not more than the length of the secondary element;
a plurality of sensors arranged at a pitch not more than the length of the secondary element for detecting positions of the moving vehicles; and
a controller for controlling the primary elements based on position signals from the sensors.

2. The moving vehicle system according to claim 1, the travel route including a diverge segment, a merge segment, and a curve segment in addition to a straight segment, and the secondary element of the linear motor being bendable in the diverge segment, the merge segment, and the curve segment along the travel route.

3. The moving vehicle system according to claim 1, the linear motor comprising a linear synchronous motor, the secondary element comprising an array of magnets, each of the sensors comprising a sensor for detecting an absolute position, and the sensors and the primary elements being arranged at a pitch not more than the length of the secondary element.

4. The moving vehicle system according to claim 3, each of sensors comprising a sensor for detecting the array of magnets of the secondary elements.

5. The moving vehicle system according to claim 3, the controller comprising a system controller and a plurality of zone controllers subordinate to the system controller, the zone controllers controlling the primary elements based on a position instruction of each moving vehicle from the system controller and position signals from the sensors;
the zone controllers each reporting positions of the moving vehicles in each of predetermined control cycles; and
the system controller sending position instructions to each of the zone controllers in each of the control cycles.

6. The moving vehicle system according to claim 5, the controller controlling the moving vehicles to travel synchronously at a same speed along the travel route.

7. A method of controlling moving vehicles in a system comprising:
a plurality of the moving vehicles each having a secondary element of a linear motor; and
primary elements of the linear motor arranged along a travel route of the moving vehicles at the pitch not more than the length of the secondary element, the method comprising the steps of:
a) detecting positions of the moving vehicles continuously using a plurality of sensors arranged at the pitch not more than the length of the secondary element; and
b) controlling the primary elements based on the determined positions.
